# EUROPEAN PATENT APPLICATION

(11) **EP 4 717 444 A1**
(43) Date of publication of application: **01.04.2026**
(21) Application number: 25202511.9
(22) Date of filing: 16.09.2025
(51) Int. Cl.: B29C 65/08, B29C 65/00, B29C 65/36, B29C 65/78, B29K 705/02

(54) **SEALING ANVIL DEVICE, SEALING DEVICE, PACKAGE FORMING APPARATUS FOR A PACKAGING MACHINE AND PACKAGING MACHINE FOR FORMING PACKAGES FILLED WITH A POURABLE PRODUCT**

(30) Priority: 26.09.2024 IT 202400021378
(71) Applicant: Tetra Laval Holdings & Finance S.A., 1009 Pully (CH)
(72) Inventor: BARBI, Massimiliano, 41123 Modena (IT); PRADELLI, Massimo, 41123 Modena (IT); CATELLANI, Andrea, 41123 Modena (IT); FONTANAZZI, Paolo, 41123 Modena (IT)
(74) Representative: Tetra Pak Patent Attorneys

(57) **Abstract**

There is described a sealing anvil device (28) comprising a main structure (35) having an engagement surface (36) extending along a longitudinal axis (A) and being configured to engage a tube (4) filled with a pourable product for compressing the tube (4) along a transversal portion, the sealing anvil device (28) further comprising a carrier device (37) carrying the main structure (35). A center portion (38) of the main structure (35) is angularly moveably coupled to a coupling group (39) of the carrier device (37) such that the main structure (35) is angularly moveable about a rotation axis (B). The rotation axis (B) is transversal to the longitudinal axis (A).

## Description

### TECHNICAL FIELD

The present invention relates to a sealing anvil device for a sealing device for transversally sealing a tube filled with a pourable product.

Advantageously, the present invention also relates to a sealing device for transversally sealing a tube filled with a pourable product.

Advantageously, the present invention also relates to a package forming apparatus for forming packages form a tube filled with a pourable product and comprising one or more sealing devices.

Advantageously, the present invention also relates to a packaging machine for forming packages filled with a pourable product and comprising a package forming apparatus.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilizing apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises a plurality of operative devices, each having one respective first operative group and one respective second operative group and a conveying unit configured to advance each first operative group and each second operative group along respective advancement paths. Moreover, each first operative group and the respective second operative group are configured to form and shape the tube in cooperation with one another when advancing in alignment with the tube and along respective active portions of the respective advancement paths.

Each operative group comprises a respective sealing device configured to transversally seal the tube along a respective transversal sealing band and a cutting element configured to transversally cut the tube at the respective transversal sealing band.

Each sealing device comprises an active sealing group having an initiator of the sealing and a passive counter-sealing group, in particular a sealing anvil device.

Each sealing anvil device has the scope of allowing to compress the tube in cooperation with the sealing group but is not provided with active components.

Each sealing anvil device comprises a main structure having an engagement surface configured to engage the tube and an alignment system so as to align the engagement surface with respect to the respective sealing group and so as to apply a uniform pressure. This is of importance to ensure a correct sealing, in particular when the sealing device operates by means of ultrasonic sealing.

Even though the known sealing anvil device work satisfactorily well, a desire is felt in the sector to further improve the known sealing anvil device.

### DISCLOSURE OF INVENTION

It is therefore an object of the present invention to provide an improved sealing anvil device, in particular an improved sealing anvil device with auto-alignment capabilities, which allows to align the sealing anvil device with respect to a respective sealing group and to guarantee a uniform pressure application.

It is therefore a further object of the present invention to provide an improved sealing device having an improved sealing anvil device, in particular an improved sealing anvil device with auto-alignment capabilities, which allows to align the sealing anvil device with respect to a respective sealing group and to guarantee a uniform pressure application.

Additionally, it is an object of the present invention to provide an improved package forming apparatus for forming packages from a tube filled with a pourable product and comprising one or more sealing devices.

Moreover, it is an object of the present invention to provide an improved packaging machine for forming packages filled with a pourable product and having a package forming apparatus.

According to the present invention, there is provided a sealing anvil device as claimed in claim 1.

Preferred non-limiting embodiments of the sealing anvil device are claimed in the claims being directly or indirectly dependent on claim 1.

According to the present invention, there is also provided a sealing device according to claim 12.

According to the present invention, there is also provided a package forming apparatus according to claim 13 or 14.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a package forming apparatus according to the present invention, with parts removed for clarity;
Figure 2 is a schematic view of a detail of the package forming apparatus of the packaging machine of Figure 1, with parts removed for clarity;
Figure 3 is a schematic view of a further detail of the package forming apparatus of the packaging machine of Figure 1, with parts removed for clarity;
Figure 4 is a perspective view of a sealing anvil device according to the present invention and being part of the package forming apparatus of the packaging machine of Figure 1, with parts removed for clarity; and
Figure 5 is a top view of the sealing anvil device of Figure 4, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar etc.

In more detail, packaging machine 1 is configured to produce packages 2 from a multilayer packaging material. Preferentially, the multilayer packaging material has heat seal properties (i.e. portions of the multilayer packaging material can be sealed to one another).

In further detail, the multilayer packaging material comprises at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas and/or water vapor and/or light barrier material, preferentially being arranged between one of the layers of heat-seal plastic material and the layer of fibrous material.

In particular, suitable materials for serving as the layer of gas and/or water vapour and/or light-barrier material include aluminium foil, paper materials and treated paper materials such as high-density or grease-proof papers, barrier-coated substrates such as cellulose based and polymeric substrates, metalized substrates such as cellulose-based or polymeric substrates with and without pre-applied barrier coating, barrier-coated polymer films such as olefinic polymer or polyamide films, combinations of these materials, and further materials having similar barrier properties.

Preferentially, the packaging material may also comprise a further layer of heat-seal plastic material being interposed between the layer of gas and/or water vapor and/or light barrier material and the layer of fibrous material.

In further detail, the multilayer packaging material may be provided in the form of a web 3.

Furthermore, packaging machine 1 may be configured to produce packages 2 by forming a tube 4 from web 3, longitudinally sealing tube 4, filling tube 4 with the pourable product and by transversally sealing and cutting tube 4.

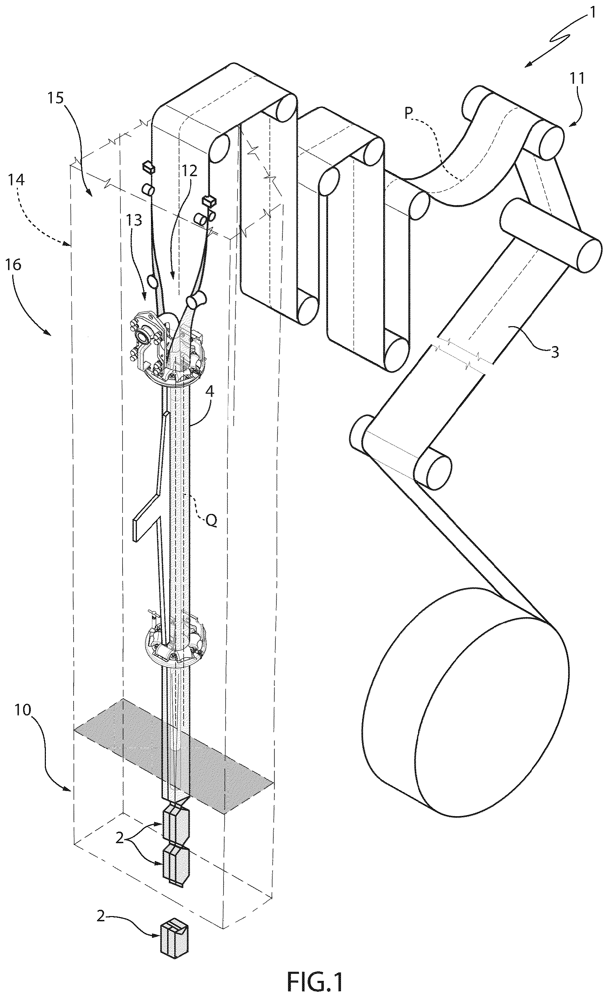

With particular reference to Figure 1, packaging machine 1 comprises a package forming apparatus 10 configured to transversally seal and to transversally cut tube 4 for obtaining packages 2. Preferentially, package forming apparatus 10 may also be configured to form tube 4.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to fold tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and configured to fold and longitudinally seal tube 4 within isolation chamber 14, in particular inner environment 15.

Moreover, packaging machine 1 may also comprise a sterilizing unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 has a vertical orientation.

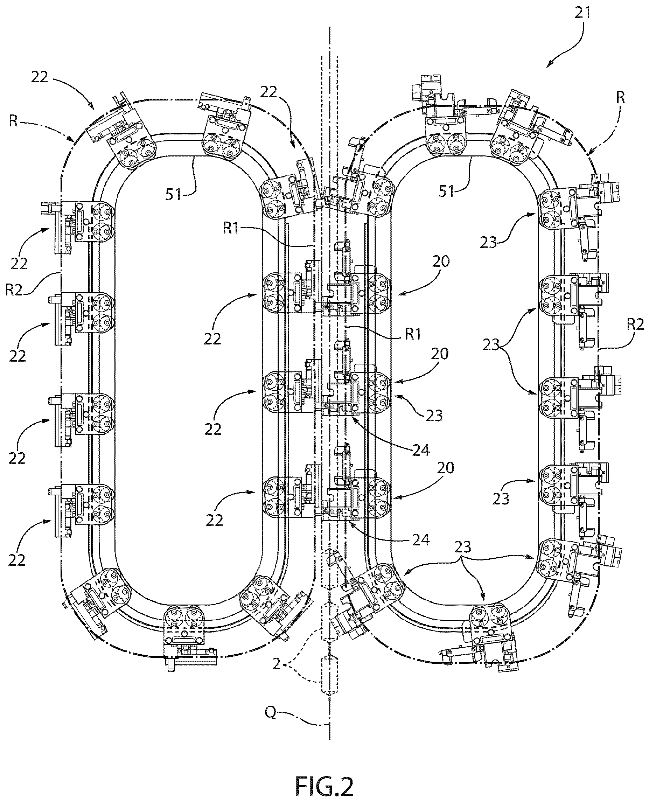

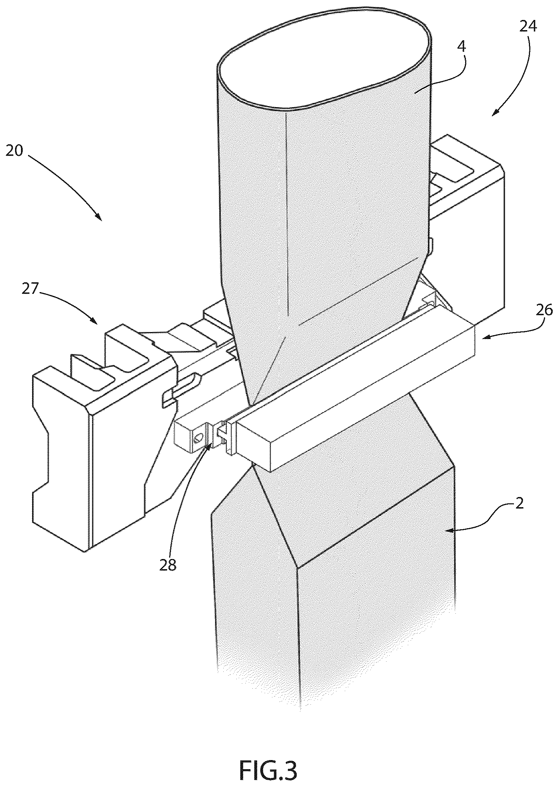

With particular reference to Figures 2 and 3, package forming apparatus 10 comprises one or more, preferentially a plurality of, operative devices 20, each one configured to at least transversally seal tube 4 and preferentially to transversally cut and form (shape) tube 4.

Moreover, package forming apparatus 10 comprises a conveying unit 21 configured to advance operative devices 20.

Preferentially, package forming apparatus 10 may be configured to control operative devices 20 and conveying unit 21 such to transversally seal and cut tube 4 along equally spaced transversal cross sections.

With particular reference to Figures 2 to 5, each operative device 20 comprises at least a first operative group 22 and a second operative group 23 configured to cooperate with one another so as to at least transversally seal, and preferentially to also transversally cut and to least partially form, tube 4.

Conveying unit 21 may be configured to advance first operative groups 22 and second operative groups 23 along respective (endless) advancement paths R.

Moreover, each first operative group 22 and the respective second operative group 23 may be configured to cooperate with one another for forming a package 2 when advancing along respective operative sections R1 of the respective advancement paths R. In particular, each first operative group 22 and the respective second operative group 23 engage tube 4 from opposite sides thereof while advancing along the respective operative section R1.

Additionally, each advancement path R comprises a respective return section R2, which allows to return first operative groups 22 and second operative groups 23 back to the respective operative sections R1.

In particular, first operative groups 22 and second operative groups 23 advance parallel to tube 4, i.e. parallel to tube advancement path Q, when advancing along the respective operative sections R1.

With particular reference to Figures 2 and 3, each operative device 20 comprises at least one sealing device 24 configured to transversally seal tube 4.

Additionally, each operative device 20 may comprise at least one cutting assembly 25 configured to transversally cut tube 4.

In more detail and with particular reference to Figure 3, each sealing device 24 comprises a sealing group 26 and a counter-sealing group 27 configured to seal in cooperation with each other tube 4, preferentially for creating a respective transversal sealing band.

More specifically, each sealing group 26 and the respective counter-sealing group 27 may be configured to engage tube 4 from opposite sides thereof so as to transversally compress, in particular flat-lay and squeeze, tube 4 and to transversally seal tube 4.

In particular, each first operative group 22 comprises and/or carries the respective sealing group 26 and each second operative group 23 comprises and/or carries the respective counter-sealing group 27.

More specifically, in use, each sealing group 26 and the respective counter-sealing group 27 are configured to engage tube 4 while the respective first operative group 22 and the respective second operative group 23 advance along the respective operative sections R1.

In further detail, each sealing group 26 comprises an initiator for inducting the transversal sealing. In particular, the initiator has a source configured to generate the energy needed to obtain the sealing effect. For example, the source may comprise a sonotrode having ultrasound-emitters or an electromagnetic induction source for generating heat by means of induction heating.

Each counter-sealing group 27 is a passive element (i.e. not having an active source). In particular, each counter-sealing group 27 comprises a sealing anvil device 28.

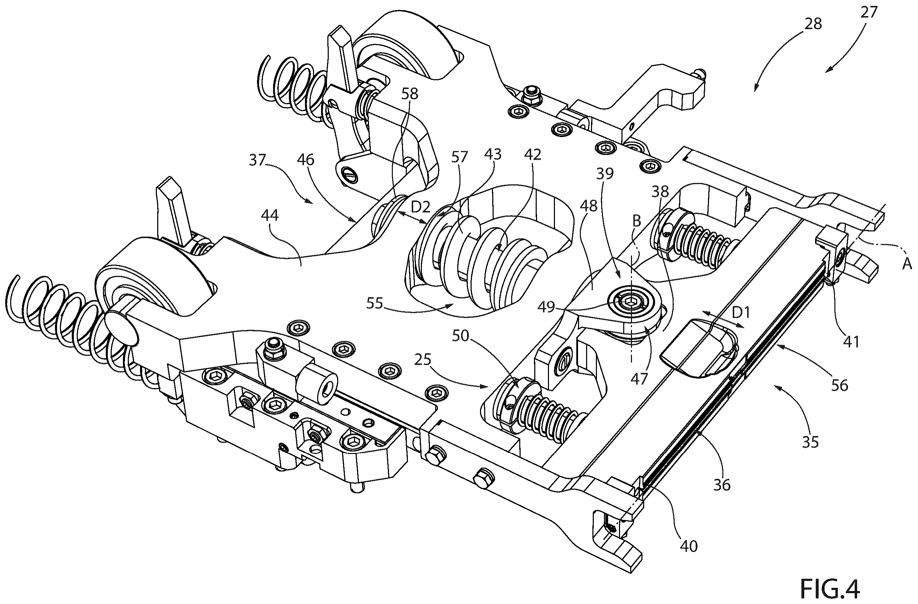

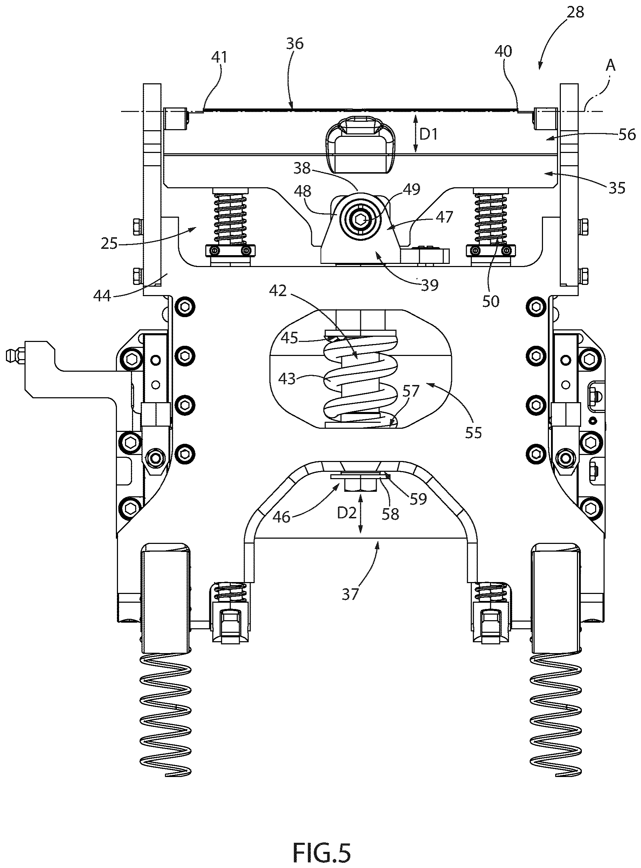

With particular reference to Figures 4 and 5, each sealing anvil device 28 comprises a main structure 35, in particular main structure 35 having an anvil 56.

More specifically, each main structure 35, in particular the respective anvil 56, has an engagement surface 36 extending along a longitudinal axis A and being configured to engage tube 4 for compressing tube 4, in particular in cooperation with the respective sealing group 26, along a transversal portion of tube 4.

Additionally, sealing anvil device 28 comprises a carrier device 37 carrying, in particular angularly moveably carrying, main structure 35.

In more detail, a center portion 38 of main structure 35 is angularly moveably coupled to a coupling group 39 of carrier device 37.

In particular, center portion 38 is angularly moveably coupled to coupling group 39 such that main structure 35 is angularly moveable about a rotation axis B.

Additionally, rotation axis B is transversal, in particular perpendicular, to longitudinal axis A.

In particular, as will be explained in more detail further below, owing to the fact that main structure 35 is angularly moveably coupled to coupling group 39 one obtains an auto-alignment of engagement surface 36 with respect to the respective sealing group 26 thereby guaranteeing a uniform application of the sealing pressure.

In more detail, rotation axis B is defined by coupling group 39.

Advantageously, main structure 35 and carrier device 37 are operatively connected to one another only by means of coupling group 39, and only at a single connection point.

Additionally, center portion 38 is opposite to engagement surface 36.

More specifically, center portion 38 and engagement surface 36 are spaced apart from one another along a direction D1. In particular, direction D1 is transversal, in particular perpendicular, to longitudinal axis A and transversal, in particular perpendicular, to rotation axis B.

With particular reference to Figures 4 and 5, engagement surface 36 extends along longitudinal axis A between a first end 40 and a second end 41 opposite to first end 40.

Moreover, center portion 38 and/or rotation axis B is/are centrally arranged with respect to first end 40 and second end 41.

With particular reference to Figures 4 and 5, carrier device 37 comprises a rod 42 carrying at least a portion of coupling group 39. In particular, rod 42 is linearly moveable, even more particular linearly moveable along a movement direction D2 perpendicular to rotation axis B.

More specifically, a portion of coupling group 39 is connected, in particular integrally connected, to a first end of rod 42.

Carrier device 37 also comprises an elastic element 43, in particular a spring, configured to generate a force acting on main structure 35, and in particular such to force, i.e. to push, engagement surface 36 towards tube 4.

In particular, elastic element 43 is configured to generate a force on main structure 35.

In particular, elastic element 43 defines, i.e. creates, at least partially the sealing pressure acting on tube 4 during interaction of sealing group 26 and the respective counter-sealing group 27.

Preferentially, carrier device 37 comprises only one elastic element 43.

Advantageously, elastic element 43, in particular the spring, surrounds rod 42.

Additionally, carrier device 37 further comprises a support structure 44 moveably carrying rod 42.

Advantageously, elastic element 43, in particular the spring, abuts against and is interposed between a first abutment surface 45 and a second abutment surface 57.

More specifically, rod 42 comprises first abutment surface 45. In particular, rod 42 comprises an annular protrusion carrying first abutment surface 45.

Moreover, support structure 44 comprises the second abutment surface 57.

Elastic element 43, in particular the spring, generates a force on main structure 35 by acting on rod 42.

In particular, rod 42 extends through a first passage and a second passage of support structure 44.

In particular, the first passage and the second passage open into a cavity 55 of support structure 44.

In particular, elastic element 43, in particular the spring, is (substantially) interposed between the first passage and the second passage.

Advantageously, at least a portion of rod 42 and elastic element 43 are arranged within cavity 55.

A portion of an inner wall of cavity 55, i.e. a portion of a wall internally delimiting cavity 55, defines second abutment surface 57.

Moreover, carrier device 37 further comprises a limiting group 46 for limiting a linear movement of rod 42.

More specifically, limiting group 46 comprises an abutment element 58 connected to rod 42, in particular to a second end rod 42 opposite to the first end, and configured to abut against an abutment surface 59 of support structure 44.

In particular, in use, abutment element 58 abuts against abutment surface 59 when counter-sealing element 27 is disengaged from the respective sealing element 26. When, in use, counter-sealing element 27 interacts with the respective sealing element 26 for compressing tube 4, rod 42 moves with respect to support structure 44 and elastic element 43 is compressed. Additionally, abutment element 58 moves away from abutment surface 59.

With particular reference to Figures 4 and 5, coupling group 39 comprises a clevis fastener 47 angularly moveably carrying main structure 35.

In more detail, center portion 38 is angularly moveably coupled to clevis fastener 47.

In even more detail, clevis fastener 47 comprises a clevis 48 being connected, in particular integrally connected, to rod 42 and a clevis pin 49 extending through respective through-holes of clevis 48 and through a through-hole of center portion 38.

With particular reference to Figures 4 and 5, each cutting assembly 25 comprises a blade (not shown) configured to transversally cut tube 4 and being controllable in a retracted configuration and an extracted configuration. Additionally, each cutting assembly 25 comprises an actuation system 50 configured to control the blade between the retracted configuration and the extracted configuration.

Advantageously, each counter-sealing group 27 may comprise the respective blade.

Additionally, each sealing group 26 may comprise a groove of the respective cutting assembly 25 configured to receive a portion of the respective blade.

In further detail, each operative device 20 may also comprise a forming shell assembly configured to form tube 4, preferentially to at least partially define the shape of packages 2.

In more detail, each forming shell assembly comprises a first half-shell (not shown and known as such) and a second half-shell (not shown and known as such) configured to at least partially define in cooperation with one another the shape of packages 2. Preferentially, each first half-shell and the respective second half-shell may be configured to contact tube 4 from opposite sides thereof.

Preferentially, first operative group 22 comprises the first half-shell and second operative group 23 comprises the second half-shell.

With particular reference to Figure 2, conveying unit 21 comprises two spaced apart supports 51 moveably carrying first operative groups 22 and second operative groups 23 and an actuating mechanism for moving first operative groups 22 and second operative groups 23 along supports 51. In particular, supports 51 define advancement paths R.

According to the example shown, the actuating mechanism operates by means of the generation of electromagnetic fields. Alternatively, the actuating mechanism could operate by mechanical means such as chains carrying first operative groups 22 and second operative groups 23 or by moving first operative groups 22 and second operative groups 23 along support columns of the respective supports 51.

In use, packaging machine 1 produces packages 2 filled with the pourable product.

In more detail, conveying device 11 advances web 3 along web advancement path P to the tube forming station. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 20 transversally seal and cut tube 4.

During transversal sealing, each sealing group 22 and the respective counter-sealing group 23, in particular the respective sealing anvil device 28, engage tube 4 from opposite sides thereof and compress tube 4.

Each engagement surface 36 is aligned with respect to sealing group 22 thanks to carrier device 37 angularly moveably carrying main structure 35.

The advantages of sealing anvil device 28 according to the present invention will be clear from the foregoing description.

In particular, sealing anvil device 28 comes along with a simple structure allowing self-alignment.

Additionally, the self-alignment of sealing anvil device 28 comes along with good sealing quality without the need of time-consuming settings of the mechanical parts.

Clearly, changes may be made to sealing anvil device 28 as described herein without, however, departing from the scope of protection as defined in the accompanying claims.

## Claims

1. Sealing anvil device (28) for a sealing device (24) for transversally sealing a tube (4) filled with a pourable product;
the sealing anvil device (28) comprises:
- a main structure (35) having an engagement surface (36) extending along a longitudinal axis (A) and being configured to engage the tube (4) for compressing the tube (4) along a transversal portion; and
- a carrier device (37) carrying the main structure (35);
wherein a center portion (38) of the main structure (35) is angularly moveably coupled to a coupling group (39) of the carrier device (37) such that the main structure (35) is angularly moveable about a rotation axis (B);
wherein the rotation axis (B) is transversal to the longitudinal axis (A).

2. Sealing anvil device according to claim 1, wherein the rotation axis (B) is perpendicular to the longitudinal axis (A).

3. Sealing anvil device according to any one of the preceding claims, wherein the center portion (38) is opposite to the engagement surface (36).

4. Sealing anvil device according to any one of the preceding claims, wherein the carrier device (37) comprises an elastic element (43) configured to generate a force acting on the main structure (35).

5. Sealing anvil device according to any one of the preceding claims, wherein the carrier device (37) comprises a rod (42) carrying the coupling group (39).

6. Sealing anvil device according to claim 5, wherein the rod (42) is linearly moveable along a movement direction (D2) perpendicular to the rotation axis (B).

7. Sealing anvil device according to claim 5 or 6 as claim 5 is appended to claim 4, wherein the carrier device (37) further comprises a support structure (44) moveably carrying the rod (42), wherein the elastic element (43) is interposed between a first abutment surface (45) of the rod (42) and a second abutment surface (57) of the support structure (44);
wherein the elastic element (43) generates a force on the main structure (35) by acting on the rod (42).

8. Sealing anvil device according to any one of claims 5 to 7 as claim 5 is appended to claim 4, wherein at least a portion of the rod (42) and the elastic element (43) are arranged within a cavity (55) of the support structure (44);
wherein a portion of a wall internally delimiting the cavity (55) defines the second abutment surface (57).

9. Sealing anvil device according to any one of claims 5 to 8, wherein the carrier device (37) further comprises a limiting group (46) for limiting a linear movement of the rod (42).

10. Sealing anvil device according to any one of the preceding claims, wherein the coupling group (39) comprises a clevis fastener (47);
wherein the center portion (38) is angularly moveably coupled to the clevis fastener (47).

11. Sealing anvil device according to any one of the preceding claims, wherein the engagement surface (36) extends along the longitudinal axis (A) between a first end (40) and a second end (41);
wherein the center portion (38) and/or the rotation axis (B) is/are centrally arranged with respect to the first end (40) and the second end (41).

12. Sealing device (24) for a package forming apparatus (10), the sealing device (25) being configured for transversally sealing a tube (4) formed from a web of packaging material;
wherein the sealing device (24) comprises a sealing group (26) and a counter-sealing group (27) configured to engage the tube (4) from opposite sides thereof so as to transversally compress and to transversally seal the tube (4);
wherein the sealing group (26) comprises an initiator for inducing the transversal sealing;
wherein the counter-sealing group (27) comprises a sealing anvil device (28) according to any one of the preceding claims.

13. Package forming apparatus (10) for a packaging machine (1), the package forming apparatus (10) being configured to transversally seal a tube (4) formed from a web of packaging material for obtaining packages (2);
wherein the package forming apparatus (10) comprises at least one operative device (20) having a sealing device (24) according to claim 12 and being configured to transversally seal the tube (4);
wherein the at least one operative device (20) comprises a first operative group (22) comprising the respective sealing group (26) of the sealing device (24) and a second operative group (23) comprising the respective counter-sealing group (27) of the sealing device (24);
wherein the sealing group (26) and the counter-sealing group (27) are configured to engage the tube (4) from opposite sides thereof so as to transversally compress the tube (4) and to transversally seal the tube (4).

14. Package forming apparatus according to claim 13, and further comprising a conveying unit (21) configured to advance the first operative group (22) and the second operative group (23) along respective advancement paths (R);
wherein the first operative group (22) and the second operative group (46) are configured to cooperate with one another for transversally sealing the tube (4) when advancing along respective operative sections (R1) of the respective advancement paths (R).

15. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to claim 14.

## Amended claims

### Amended claims in accordance with Rule 137(2) EPC.

1. Sealing anvil device (28) for a sealing device (24) for transversally sealing a tube (4) filled with a pourable product;
the sealing anvil device (28) comprises:
- a main structure (35) having an engagement surface (36) extending along a longitudinal axis (A) and being configured to engage the tube (4) for compressing the tube (4) along a transversal portion; and
- a carrier device (37) carrying the main structure (35);
wherein a center portion (38) of the main structure (35) is angularly moveably coupled to a coupling group (39) of the carrier device (37) such that the main structure (35) is angularly moveable about a rotation axis (B);
wherein the rotation axis (B) is transversal to the longitudinal axis (A)
**characterized in that** the coupling group (39) comprises a clevis fastener (47);
wherein the center portion (38) is angularly moveably coupled to the clevis fastener (47).

2. Sealing anvil device according to claim 1, wherein the rotation axis (B) is perpendicular to the longitudinal axis (A).

3. Sealing anvil device according to any one of the preceding claims, wherein the center portion (38) is opposite to the engagement surface (36).

4. Sealing anvil device according to any one of the preceding claims, wherein the carrier device (37) comprises an elastic element (43) configured to generate a force acting on the main structure (35).

5. Sealing anvil device according to any one of the preceding claims, wherein the carrier device (37) comprises a rod (42) carrying the coupling group (39).

6. Sealing anvil device according to claim 5, wherein the rod (42) is linearly moveable along a movement direction (D2) perpendicular to the rotation axis (B).

7. Sealing anvil device according to claim 5 or 6 as claim 5 is appended to claim 4, wherein the carrier device (37) further comprises a support structure (44) moveably carrying the rod (42), wherein the elastic element (43) is interposed between a first abutment surface (45) of the rod (42) and a second abutment surface (57) of the support structure (44);
wherein the elastic element (43) generates a force on the main structure (35) by acting on the rod (42).

8. Sealing anvil device according to any one of claims 5 to 7 as claim 5 is appended to claim 4, wherein at least a portion of the rod (42) and the elastic element (43) are arranged within a cavity (55) of the support structure (44);
wherein a portion of a wall internally delimiting the cavity (55) defines the second abutment surface (57).

9. Sealing anvil device according to any one of claims 5 to 8, wherein the carrier device (37) further comprises a limiting group (46) for limiting a linear movement of the rod (42).

10. Sealing anvil device according to any one of the preceding claims, wherein the engagement surface (36) extends along the longitudinal axis (A) between a first end (40) and a second end (41);
wherein the center portion (38) and/or the rotation axis (B) is/are centrally arranged with respect to the first end (40) and the second end (41).

11. Sealing device (24) for a package forming apparatus (10), the sealing device (25) being configured for transversally sealing a tube (4) formed from a web of packaging material;
wherein the sealing device (24) comprises a sealing group (26) and a counter-sealing group (27) configured to engage the tube (4) from opposite sides thereof so as to transversally compress and to transversally seal the tube (4);
wherein the sealing group (26) comprises an initiator for inducing the transversal sealing;
wherein the counter-sealing group (27) comprises a sealing anvil device (28) according to any one of the preceding claims.

12. Package forming apparatus (10) for a packaging machine (1), the package forming apparatus (10) being configured to transversally seal a tube (4) formed from a web of packaging material for obtaining packages (2);
wherein the package forming apparatus (10) comprises at least one operative device (20) having a sealing device (24) according to claim 11 and being configured to transversally seal the tube (4);
wherein the at least one operative device (20) comprises a first operative group (22) comprising the respective sealing group (26) of the sealing device (24) and a second operative group (23) comprising the respective counter-sealing group (27) of the sealing device (24);
wherein the sealing group (26) and the counter-sealing group (27) are configured to engage the tube (4) from opposite sides thereof so as to transversally compress the tube (4) and to transversally seal the tube (4).

13. Package forming apparatus according to claim 12, and further comprising a conveying unit (21) configured to advance the first operative group (22) and the second operative group (23) along respective advancement paths (R);
wherein the first operative group (22) and the second operative group (46) are configured to cooperate with one another for transversally sealing the tube (4) when advancing along respective operative sections (R1) of the respective advancement paths (R).

14. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and for advancing the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to claim 13.
